# EUROPEAN PATENT APPLICATION

(11) **EP 3 023 626 A1**
(43) Date of publication of application: **25.05.2016**
(21) Application number: 14825955.9
(22) Date of filing: 16.07.2014
(51) Int. Cl.: F02M 27/04

(54) **FUEL-EFFICIENT AND EMISSION REDUCTION DEVICE OF ENGINE**

(30) Priority: 16.07.2013 CN 201320440786 U
(71) Applicant: Chan, Yuk Charm, Taishan, Guangdong 529235 (CN)
(72) Inventor: Chan, Yuk Charm, Taishan, Guangdong 529235 (CN)
(74) Representative: De Pablos Riba, Juan Ramon
(86) International application number: PCT/CN2014/000675
(87) International publication number: WO 2015/007074

(57) **Abstract**

A fuel-saving and emission-reduction device of an engine, having a barrel-shaped structure, comprising an inner pipe 1 and an outer pipe 2; enamel layers 3 are respectively covered on an inner layer and an outer layer of the inner pipe 1; a stainless steel net 4 is covered on the surface of the enamel layer of the outer layer of the inner pipe; both ends between the outer pipe 2 and the inner pipe 1 are respectively connected through fixing screws 5; a fan 8 is installed on one end, and a space is reserved between the inner pipe 1 and the outer pipe 2 to form two ventilating ducts, i.e., an inner ventilating duct 6 and an outer ventilating duct 7; and a voltage regulator 9 is arranged on the surface of the outer pipe. When the air passes through a passage between the inner pipe and the outer pipe, the air is ionized to carry out an electrochemical reaction to generate high-pressure pure oxygen; and the high-pressure pure oxygen enters a combustion chamber of the engine for promoting the sufficient combustion of the fuel, thereby saving the fuel, increasing the output horsepower of the engine, and reducing the emission of waste gas from the engine.

## Description

### TECHNICAL FIELD

The invention relates to an additional device on an engine, in particular to a device applied to all engines and capable of reducing fuel consumption of the engine, increasing the output horsepower of the engine and reducing the emission of harmful gas from the engine.

### BACKGROUND OF THE INVENTION

At present, there are some problems that need to be solved for governments around the world: warming global climate, serious atmospheric pollution, shortage of global energy, massive exploitation of petroleum and mineral resources and continuous rise of fuel price.

Rapid development of global economic integration, urban capital construction, national economic development, human life, etc. cannot advance without the engine; and the engine has an extremely wide application scope for modern society. The engine is a critical key part in the fields of automobiles, ships, aircrafts, tanks, generators, and various engineering machineries, etc. The engine is the heart of modern industry as well as an indispensable important part of modern human life. The new requirements of people for the engine are to reduce the fuel consumption of the engine, increase the power of the engine and reduce the emission of harmful gas from the engine.

The maximum source of urban atmosphere pollution mainly comes from the engine having various purposes. The fuel utilization rate of a general internal combustion engine is only about 70%. The fuel is insufficient in combustion and the combustion efficiency is low. The remaining about 30% of fuel that fails to sufficiently combust becomes waste gas. The waste gas contains a large amount of carbon monoxide, including such pollutants as PM2.5 particles, etc. which are discharged from an exhaust pipe, causing air pollution. In addition, carbon accumulation of the engine is caused due to insufficient combustion of the engine fuel and low combustion efficiency. The carbon accumulation of the engine may reduce the output power of the engine and increase the wear of the engine.

For a long time, people hopes to improve the combustion effect of the internal combustion engine and enable the fuel to sufficiently combust in a combustion chamber, so as to save the fuel, increase the power and reduce the emission of the waste gas. However, many varieties of products about emission reduction, energy saving and environmental protection are used in the engine on the current market. They all have a single function benefit or short-term effect, and the effect is slight.

### EXPLANATION OF THE INVENTION

The purpose of the invention is to provide a device in an engine system, so as to enable the fuel to burn, increase the power of the engine, increase the output horsepower of the engine, save the fuel and reduce the emission of harmful gas from the engine.

The purpose of the invention is achieved by the following technical solution:
A fuel-saving and emission-reduction device of an engine is a barrel-shaped structure which comprises an inner pipe and an outer pipe. The inner pipe is made of metal conductive material. Enamel layers are respectively covered on an inner layer and an outer layer of the inner pipe. A stainless steel conductive net is covered on the surface of the enamel layer of the outer layer. The outer pipe is made of high-temperature and high-pressure resistant insulating material. Both ends between the outer pipe and the inner pipe are respectively connected through fixing screws. A fan is installed on one end, and a space is reserved between the inner pipe and the outer pipe to form two ventilating ducts.

In the invention, air is used as a main raw material. When the air passes through a passage between the inner pipe and the outer pipe, the air is ionized to carry out an electrochemical reaction to generate high-pressure pure oxygen; and the high-pressure pure oxygen enters a combustion chamber of the engine for promoting the sufficient combustion of the fuel, thereby saving the fuel, increasing the output horsepower of the engine, and reducing the emission of waste gas from the engine.

The invention has the advantages:
1. Reasonable product design, simple manufacture, convenient installation, low cost and apparent effect.
2. Promoting sufficient combustion of the fuel in the combustion chamber of the engine and saving the fuel.
3. Increasing the power of the engine.
4. Reducing the emission of the harmful gas from the engine.
5. Reducing carbon accumulation of the engine and prolonging the life of the engine.

### DESCRIPTION OF THE DRAWINGS

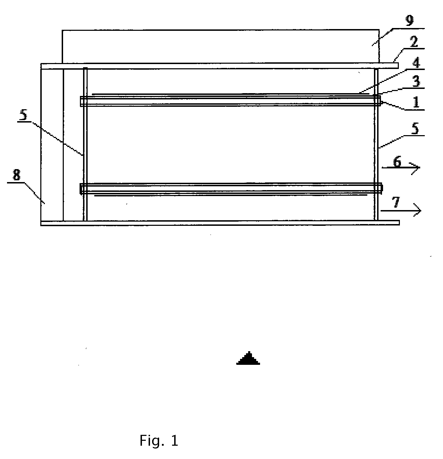

The figure is a sectional structural diagram of the invention.
In which: 1. inner pipe; 2. outer pipe; 3. enamel layer; 4. stainless steel net; 5. fixing screw; 6. inner ventilating duct; 7. outer ventilating duct; 8. fan; and 9. voltage regulator.

### DETAILED DESCRIPTION OF THE INVENTION

With reference to the figure, the invention belongs to a fuel-saving and emission-reduction device of an engine. The device is arranged in the front end position of an air intake duct of the engine or in an air intake system of the engine. The device is a barrel-shaped structure and comprises an inner pipe 1 and an outer pipe 2. Enamel layers 3 are respectively covered on an inner layer and an outer layer of the inner pipe 1. A stainless steel net 4 is covered on the surface of the enamel layer of the outer layer of the inner pipe 1. Both ends between the outer pipe 2 and the inner pipe 1 are respectively connected through fixing screws 5. A fan 8 is installed on one end of the inner pipe and the outer pipe, and a space is reserved between the inner pipe 1 and the outer pipe 2 to form two ventilating ducts, i.e., an inner ventilating duct 6 and an outer ventilating duct 7. The outer pipe 2 is made of high-temperature and high-pressure resistant insulating material. The inner pipe 1 is made of metal conductive material. A voltage regulator 9 is arranged on the surface of the outer pipe.

The working principle is as follows:
When the engine is operated, in the case where a power supply of a battery passes through the voltage regulator and is connected to the inner pipe 1 and the stainless steel net 4 respectively, the voltage conducted on the inner pipe 1 and the stainless steel net 4 has opposite polarities. Because the enamel layer 3 is covered on the outer layer of the inner pipe 1, an insulating action is effectively performed and no short circuit is generated between the inner pipe 1 and the stainless steel net 4. At this moment, the air is circulated to enter the device and passes through the inner ventilating duct 6 and the outer ventilating duct 7.

Under the action of high-voltage pulse current, the air generates the electrochemical reaction with the action of strong discharge to generate high-pressure pure oxygen. The high-pressure pure oxygen enters the combustion chamber of the engine and promotes the combustion process of the fuel, so that the fuel is combusted more sufficiently and thoroughly, thereby saving the fuel, increasing the power of the engine, and reducing the emission of waste gas from the engine.

## Claims

1. A fuel-saving and emission-reduction device of an engine, having a barrel-shaped structure and **characterized by** comprising an inner pipe 1 and an outer pipe 2; enamel layers 3 are respectively covered on an inner layer and an outer layer of the inner pipe 1; a stainless steel net 4 is covered on the surface of the enamel layer of the outer layer of the inner pipe; both ends between the outer pipe 2 and the inner pipe 1 are respectively connected through fixing screws 5; a fan 8 is installed on one end, and a space is reserved between the inner pipe 1 and the outer pipe 2 to form two ventilating ducts, i.e., an inner ventilating duct 6 and an outer ventilating duct 7; and a voltage regulator 9 is arranged on the surface of the outer pipe.

2. The fuel-saving and emission-reduction device of the engine according to claim 1, **characterized in that**: the inner pipe 1 is made of metal conductive material.

3. The fuel-saving and emission-reduction device of the engine according to claim 1, **characterized in that**: the outer pipe 2 is made of high-temperature and high-pressure resistant insulating material.

4. The fuel-saving and emission-reduction device of the engine according to claim 1, **characterized in that**: the fuel-saving and emission-reduction device is installed in the front end position of an air intake duct of the engine.

5. The fuel-saving and emission-reduction device of the engine according to claim 1, **characterized in that**: the fuel-saving and emission-reduction device can be installed in an air intake system of the engine.
